# EUROPEAN PATENT APPLICATION

(11) **EP 1 862 273 A1**
(43) Date of publication of application: **05.12.2007**
(21) Application number: 06380144.3
(22) Date of filing: 30.05.2006
(51) Int. Cl.: B26D 3/08, B26B 25/00, A01G 3/00, A01G 23/09, B27L 1/06, B26D 3/16

(54) **Pliers for making cuts in vegetable stems**

(71) Applicant: Pereira Diaz, Rafael, 36139 Tomino, (Pontevedra) (ES)
(72) Inventor: Pereira Diaz, Rafael, 36139 Tomino, (Pontevedra) (ES)
(74) Representative: Temino Ceniceros, Ignacio

(57) **Abstract**

Especially designed to make small ring-shaped cuts in the branches of kiwi trees, so that knots will form above the zone where the fruits grow making it difficult for the sap to rise, thereby causing greater quantities of nutrients to reach the fruits, the structure being basically similar to that of a pair of conventional pliers, being equipped with two arms (1) and (2) articulated (3) that form a gripping device (6), but with the characteristic feature that each one of the arms of gripping device (6) is provided with two pairs of circular blades (7), lying very close to each other, so that when the pair of pliers is clamped onto the branch of the kiwi tree and partially rotated, they make a ring-shaped cut in the bark on the branch, without affecting the wood, as the aforementioned arms of the gripping device (6) are equipped with inner buffers (10) that limit the depth to which the blades (7) can penetrate. A clean and fully effective cut is thus guaranteed, without the user being exposed to any risk.

## Description

### OBJECT OF THE INVENTION

This invention is a pair of pliers that has been especially designed to make small ring-shaped cuts in plant stems, so that these cuts will create a knot in the plant that prevents the sap from rising, thereby ensuring that the fruits that grow between the root and the zone where the cut has been made receive a larger amount of nutrients, so that a more rapid growth rate is achieved.

The object of the invention is to guarantee that the cut forms a perfect ring shape, without there being any risk of the branch wood being damaged in any way while at the same time making sure that the users of the tool are not exposed to any risk of cutting themselves.

The invention is to be applied in the industrial area of manufacturing tools for agricultural uses, and particularly tools that are to be used in kiwi plantations, although it can also be applied to other fruit trees.

### BACKGROUND TO THE INVENTION

In any species of fruit tree the nutrients that the plant takes from the soil are distributed, on the one hand they reach the branches and leaves and on the other hand they serve to help the fruit to grow. Although the leaves are essential for photosynthesis and, as a result, necessary for the survival of the plant, it is undoubtedly the case that if the access of nutrients to the branches and leaves is restricted, the number of nutrients reaching the fruit is increased and, therefore, the growth rate of the fruits themselves is increased.

As farmers are aware of this fact, they also realise the advantages of making cuts in the branches, at a suitable height, above the fruits, and that by doing so and removing the bark they create a knot that makes it difficult for the sap to flow past, so there is a greater build-up of sap below the knots and, as a result, they manage to ensure that a greater percentage of nutrients reaches the fruits.

Until the present time these cuts were made manually, with the aid of knives or other conventional cutting instruments, but this process is slow and laborious, the workers involved are exposed to the risk of cutting themselves, and the whole process is not necessarily efficient, because the cuts are often partial, so the plant recovers its bark soon afterwards thereby rendering the effects of the operation negligible, whereas in other cases the cut is too deep, damaging the branch and thus seriously damaging the plant itself.

### DESCRIPTION OF THE INVENTION

The pair of pliers that is the object of the invention overcomes the above-mentioned problems in a completely satisfactory way, enabling its user to make quick, safe and effective cuts, at depths that are perfectly adapted to the thickness of the bark that covers the branch, and the device also managing to simultaneously remove the ring of bark that has been cut.

With a view to this and to be more specific, the main characteristics of the pair of pliers that is advocated, which has the basic structure of a conventional pair of pliers, having two arms articulated by means of an intermediate yet off-centre axis, in such a way that the two arms form a zone of action for the pair of pliers, whereas the shorter one serves as a gripping device that can close up in response to the stress applied by a spring, are centred on the fact that the two arms of the gripping device contain two pairs of circular blades, mounted with freedom of movement to revolve with respective axes, set apart within each pair at a distance that coincides with the axial elevation that is envisaged for the ring of bark that is to be removed, in such a way that when the four pairs of blades are adapted to the branch, and when the gripping device is closed, a partial turn of the pair of pliers is enough to cause a cut in the bark of the branch concerned.

Another one of the characteristic features of the invention is that each arm of the gripping device is equipped with an inner buffer, whose open edge is set back with respect to the outer part of the blades whose size is consistent with the thickness of the bark, in such a way that these buffers serve to limit the depth that the blades can enter the bark, while at the same time acting as a cutting tool during the rotating motion that scoops out the bark as it cuts into it.

Finally, and in accordance with another one of the characteristic features of the invention, after an initial section of the arms of the gripping device where they diverge, there is another end section where they run parallel, which is where the blades are positioned, so that when they are working, they lie appreciably like the vertexes of an imaginary square, thereby ensuring that all the blades are in the best possible position with respect to the stem that has to receive the cut.

A clean cut is thus obtained, and one that is deep enough to affect the whole bark, but without damaging the wood.

### DESCRIPTION OF THE DRAWINGS

A set of drawings that is merely illustrative and in no way limiting has been enclosed to supplement the description that is being made, and these drawings have been included to help to make it easier to understand the characteristics of the invention, in accordance with a preferred embodiment thereof. The set of drawings comprises the following figures:
Figure 1.- This shows a general view in perspective, of a pair of pliers for making small cuts in vegetable stems designed in accordance with the object of this invention.
Figure 2.- This shows a close-up of an elevation view and cross section of the operational part of the pair of pliers, which contains the cutting blades.

### REALIZATION OF A PREFERRED EMBODIMENT OF THE INVENTION

It can be seen from the aforementioned figures that the pair of pliers advocated is similar to a conventional pair of pliers, having a pair of arms (1) and (2), joined together in an articulated way by means of an axis (3), on one side of which the handles (4) are located for handling the pair of pliers, specifically for closing them in response to the stress exerted by a spring (5), whereas there is a gripping device (6) on the opposite side of the arms, which closes when the handles (4) are brought close to each other manually.

In accordance with the invention, each one of the arms (6) on the gripping device is equipped with two pairs of circular blades (7) mounted with freedom to revolve around their axes (8), which cross the arms of the gripping device (6) at right angles to the general plan of the pair of pliers, lying inside each pair of blades (7) one on either side of the arm (6), and almost at a tangent to each pair of blades (7) of an arm to the pair of blades on the same arm.

The first section of the arms on the gripping device (6) is divergent, in keeping with the reference (6), and the second section (9) is bent back obtusely with respect to the first section, in such a way that when the pair of pliers is closed, the four pairs of blades are positioned, as has already been pointed out, in the same way as the imaginary vertices of a square, arranged perimetrically and equidistant from the branch where the cut is to be made, when pressure is exerted upon the handles (4). In this position, two parallel cuts are made on the branch when the pair of pliers as a whole partially rotates, thereby creating a ring-shaped cut in the bark, which is the part that is to be removed.

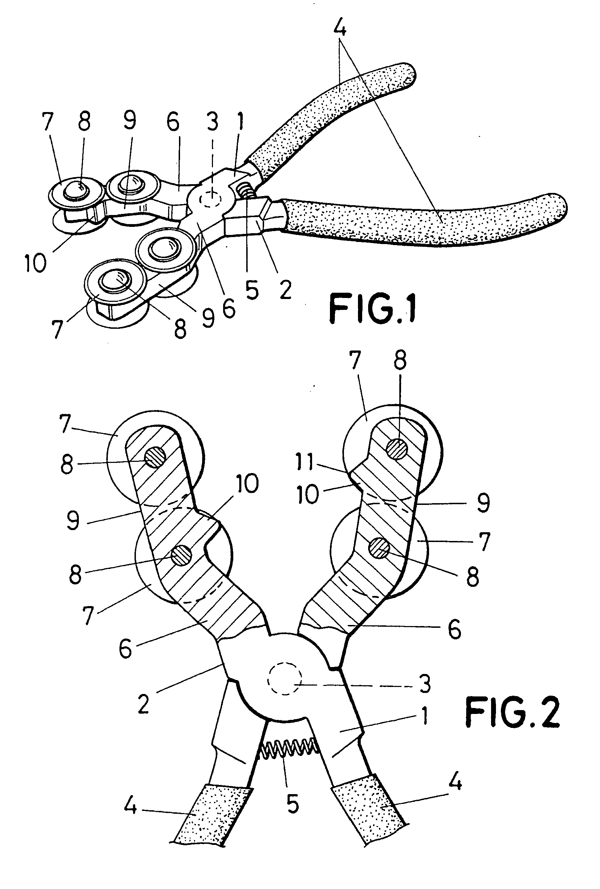

To ensure that the cut is made down to the correct depth, the end part (9) of each arm on the gripping device (6) is equipped with an inner protuberance or buffer (10) that, as can be seen especially in Figure 2, comes close to the edge of the blades (7), but leaving a gap from the edge that is exactly the same as the thickness of the bark that is to be removed.

Therefore, when the pair of pliers is closed the blades enter the branch and affect the entire bark, but without affecting the wood, so the cut is both clean and safe.

In addition, the buffers (10) have been arranged in such a way that their open edge (11) is relatively sharp, thereby ensuring that although they are not able to cut or dig into the bark, they are nevertheless capable of dragging it in the revolving movement of the pair of pliers, thus extracting the ring-shaped piece of bark delimited by the cut made by the blades (7).

## Claims

1. ^{st}. - A pair of pliers for making small cuts in vegetable stems, specifically for making ring-shaped cuts in the branches that cause knots to form thus making it difficult for the sap to pass through, which comprises two articulated arms in the central part, just like any pair of conventional pliers, which can be manually operated at one of the ends in response to the stress exerted by a spring and forming a gripping device with its other ends, which is **characterised by** the fact that each one of the arms of the gripping device (6) is equipped with two pairs of circular blades (7), lying quite close to each other, mounted with freedom to revolve on their axes (8) at right angles to the general plan of the pair of pliers and set apart at a distance that is suitable for the axial elevation of the piece of ring-shaped bark that is to be removed, all this being designed in such a way that the aforementioned ring shape is cut after the gripping device has been clamped onto the branch and when the pair of pliers is partially rotated.

2. ^{nd}. - A pair of pliers for making small cuts in vegetable stems, as in the 1^{st} Claim, **characterised by** the fact that each arm on the gripping device (6) is provided with an inside buffer (10) whose open edge moves close when the blades rotate to a distance that is consistent with the thickness of bark that has to be cut, in such a way that each buffer serves to limit the extent to which the blades sink into the branch, thereby ensuring that the blades do not actually reach the wood itself.

3. ^{rd}. - A pair of pliers for making small cuts in vegetable stems, as in the preceding claims, **characterised by** the fact that the exposed edge of the aforementioned buffers (10) is relatively sharp, in such a way that without managing to cut the bark they act as chisels that break and scoop out the bark when the pair of pliers makes a rotating movement.

4. ^{th}.- A pair of pliers for making small cuts in vegetable stems, as in the preceding claims, **characterised by** the fact that the arms on the pair of pliers have an initial divergent section (6) close to their tilting axis (3), and an end section (9) that is bent back obtusely with respect to the other section, to the extent that when the gripping device is in the closed position, the four pairs of blades lie in a position that is appreciably like the vertices of an imaginary square through the centre of which the branch axis runs.
